# EUROPEAN PATENT SPECIFICATION

(11) **EP 2 267 071 B1**
(45) Date of publication and mention of the grant of the patent: **01.05.2013**
(21) Application number: 08739423.5
(22) Date of filing: 31.03.2008
(51) Int. Cl.: C08L 23/16, C08F 236/20, C08K 3/04, C08K 3/34, C08K 5/5415, C08K 13/02, G11B 33/12, H01M 8/02

(54) **RUBBER COMPOSITION AND USE THEREOF**
KAUTSCHUKZUSAMMENSETZUNG UND VERWENDUNG DAVON
COMPOSITION DE CAOUTCHOUC ET SON UTILISATION

(43) Date of publication of application: 29.12.2010
(73) Proprietor: NOK Corporation, Minato-ku Tokyo 105-8585 (JP)
(72) Inventor: SANO, Hiroyuki, Fujisawa-shi Kanagawa 251-0042 (JP)
(74) Representative: HOFFMANN EITLE
(86) International application number: PCT/JP2008/056309
(87) International publication number: WO 2009/122487

(56) References cited:
- EP-A1- 1 464 670
- EP-A1- 1 605 015
- WO-A1-00/43447
- WO-A1-03/057777
- JP-A- 7 102 248
- JP-A- 11 035 635
- JP-A- 11 323 030
- JP-A- 58 215 434
- JP-A- 2000 309 709
- JP-A- 2002 212 342
- JP-A- 2002 348 415
- JP-A- 2004 204 181
- JP-A- 2005 050 666
- JP-A- 2006 282 887
- JP-A- 2007 063 465
- JP-B- 2 961 068
- JP-T- 2004 529 240

## Description

### TECHNICAL FIELD

The present invention relates to a rubber composition and uses thereof. More particularly, the present invention relates to a rubber composition which can be favorably used for a fuel cell sealing member, various gasket members such as a gasket member for LIM molding, a sealing member for an electric wire connector, etc., and also relates to a fuel cell sealing member, a hard disk drive top cover gasket, a gasket member for LIM molding and a sealing member for an electric wire connector each of which is obtained from the rubber composition, and main bodies comprising any of these members mounted thereon.

### BACKGROUND ART

Sealing parts and gasket parts used in electrical appliances are essentially required to be excellent in barrier properties, sealing properties, etc., to satisfy desired hardness, to have high heat resistance so as to be able to withstand heat generated during application of electric current and to be employable also in low-temperature environment.

For example, for cell sealing members for fuel cells and the like, low-cost materials excellent in heat resistance, acid resistance, gas permeation resistance and high-speed moldability have been desired, and in the existing circumstances, a fluororubber has been adopted from the viewpoints of heat resistance and acid resistance, a butyl rubber has been adopted from the viewpoint of gas permeation resistance, and a silicone rubber has been adopted from the viewpoints of heat resistance and moldability. However, when the high-speedmoldability is required, usual materials are insufficient to meet the requirement, and studies have thus been made on a method in which a liquid silicone rubber is used and liquid injection molding (LIM) is applied. The silicone rubber is excellent in heat resistance and high-speed moldability, but it cannot be said that the silicone rubber is satisfactory in acid resistance and gas permeation resistance.

With minimization of size and increase in performance of electronic equipments, decrease in size and thickness of their components has been desired. However, when the size of the components is decreased, assembly workability in manufacturing is deteriorated. Therefore, integration and combination of various components have been desired.

For example, a gasket for a hard disk drive that is an electronic memory device is sometimes used in such a form that a simple rubber or a urethane foam sheet is interposed between metal covers such as stainless steel covers or aluminum covers and they are bonded with an adhesive and thereby integrated, and then used. However, simultaneously with the integration, decrease in weight and thickness of the metal covers is carried out, and therefore, if the hardness (reaction force) of the gasket is high, a problem of deformation of the covers takes place.

Under such circumstances, a styrene-based thermoplastic elastomer has been disclosed for a gasket member (Patent document 1). This document describes that the styrene-based thermoplastic elastomer has low hardness and does not need a vulcanization process differently from rubber materials, which enables simplification of the production process and recycling of the elastomer.

However, the elastomer tends to be exposed to higher temperatures (particularly not lower than 80°C) in the use environment because of generation of heat due to increase in performance (high rotational speed) of hard disk drives and adoption of the elastomer in automobiles. In such environment, the conventional styrene-based thermoplastic elastomer has a problem of permanent set at high temperatures, which is one of mechanical properties of the elastomer, and there is a limitation on the performance of the elastomer.

Electric wire connectors have functions of connecting and branching electric wires, and comprises a pair of male and female resin frames that can be connected to each other through one-touch operation, an electric wire and a sealing member. The sealing member is mainly used as a dust seal between the electric wire and the resin frame. The sealing member used in this type of the electric wire connector requires sealing properties and insertion properties for thin electric wires, and a silicone rubber and a nitrile rubber which have low hardness and which are oil-bleeding type rubbers have been used in the past. These rubbers, however, mainly contain silicone oil as a plasticizer, and the plasticizer adheres to electrical contact points during the use, resulting in occurrence of troubles in the flow of electric current due to insulation at the electrical contact points.

Under such circumstances, Patent document 2 has proposed a rubber composition, which is excellent in high-speed moldability, heat resistance, acid resistance and gas permeation resistance and which is favorably used for a fuel cell sealing member, a gasket member for an electronic device such as a hard disk drive, a sealing member for an electric wire connector, etc. This rubber composition is a liquid rubber composition which can be applied to LIM molding, and which can provide molded products of low hardness. Therefore, this rubber composition is suitable for a sealing member for a fuel cell, a gasket member for a hard disk drive, etc. for which sealing properties with low reaction force are required even under high compression.

By the way, fuel cells have required to undergo reaction at higher temperatures and to be improved in performance of power generation. However, molded products obtained from such conventional rubber compositions as above sometimes crack when they are highly compressed at high temperatures. Therefore, when the conventional rubber compositions are used for sealing members for fuel cells having elevated reaction temperatures, there is a problem of insufficient heat resistance. Accordingly, there has been eagerly desired development of a rubber composition which can be applied to high-speed molding, is excellent in barrier properties, sealing properties and the like and is capable of providing rubber molded products satisfying desired hardness and having such further improved heat resistance that no crack occurs even when they are used under the conditions of high temperatures and high compression.
Patent document 1: Japanese Patent No. 2961068
Patent document 2: International Publication WO03/057777
EP 1 464 670 discloses a rubber composition for fuel cell seals, top cover gaskets for hard disk drivers or cable connector seals, comprising an ethylene/α-olefin/non-conjugated polyene copolymer [A]; an organopolysiloxane [B] having an average composition formula (I) of R¹ₜSiO_{(4-t)/2} wherein R¹ is an optionally substituted monovalent hydrocarbon group and t is a number ranging from 1.9 to 2.1; and an SiH group-containing compound [C]; wherein the weight ratio ([A] : [B]) is in the range of 100:0 to 5:95.
EP 1 605 015 relates to pellets comprising (A) 100 pbw of an ethylene/α-olefin/non-conjugated polyene copolymer containing a constitutional unit derived from a non-conjugated polyene of a general Formula [I] or [II], (B) 1-150 pbw of a plasticizer and (C) 0-30 pbw of a thermoplastic resin; and to a vulcanized rubber of thermoplastic elastomer made from these pellets.

### DISCLOSURE OF THE INVENTION

### PROBLEM TO BE SOLVED BY THE INVENTION

It is an object of the present invention to provide a rubber composition which is excellent in sealing properties and acid resistance, has low reaction force, low hardness and low compression set and particularly has such high heat resistance that no crack occurs even when it is used under the conditions of high temperatures and high compression. It is another object of the present invention is to provide uses of the rubber composition and main bodies on which the rubber composition has been mounted.

### MEANS TO SOLVE THE PROBLEM

The rubber composition of the present invention comprises:
an ethylene/α-olefin/non-conjugated polyene copolymer [A] satisfying the following (a) to (e):
   (a) said copolymer is a copolymer of ethylene, an α-olefin and a non-conjugated polyene,
   (b) the α-olefin has 3 to 20 carbon atoms,
   (c) the weight ratio of ethylene units to α-olefin units is in the range of 35/65 to 95/5,
   (d) the iodine value is in the range of 0.5 to 50, and
   (e) the intrinsic viscosity [η] is in the range of 0.01 to 5.0 dl/g as measured in decalin at 135°C, and
      calcined talc [B].

In the rubber composition of the present invention, theethylene/α-olefin/non-conjugated polyene copolymer [A] preferably further satisfies the following (f) :
(f) the non-conjugated polyene is at least one kind of norbornene compound represented by the following general formula [I]:

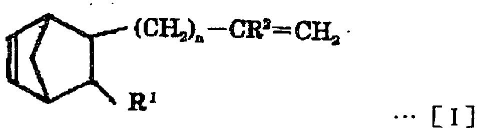

wherein n is an integer of 0 to 10, R¹ is a hydrogen atom or an alkyl group of 1 to 10 carbon atoms, and R² is a hydrogen atom or an alkyl group of 1 to 5 carbon atoms.
In the rubber composition of the present invention, the average particle diameter of the calcined talc [B] is preferably in the range of 2 to 15 µm, and
the amount of the calcined talc [B] blended is preferably in the range of 2 to 50 parts by weight based on 100 parts by weight of the total amount of the ethylene/ α-olefin/non-conjugated polyene copolymer [A] and other resin components contained in the rubber composition.

The rubber composition of the present invention preferably further comprises:
surface-modified silica [C] obtained by surface-modifying precipitated silica and having a BET specific surface area of 30 to 80m²/g, a particle diameter, as measured by the Coulter counter method, of 1 to 4 µm and an M value of not less than 50, and/or
carbon black [D] having an adsorbed amount of iodine of not more than 80 mg/g, an average particle diameter of not more than 250 nm and an absorbed amount of DBP of 10 to 300 cm³/100 g.

In the rubber composition of the present invention, the total amount of the calcined talc [B], the surface-modified silica [C] and the carbon black [D] is preferably in the range of 10 to 60 parts by weight based on 100 parts by weight of the total amount of the ethylene/α-olefin/non-conjugated polyene copolymer [A] and other resin components contained in the rubber composition.

The resin component contained in the rubber composition of the present invention is preferably only the ethylene/α -olefin/non-conjugated polyene copolymer [A].

The rubber composition of the present invention preferably further comprises a SiH group-containing compound [E] represented by the following general formula [II] and having two SiH groups in one molecule and a SiH group-containing compound [F] represented by the following general formula [III] and having three SiH groups in one molecule;

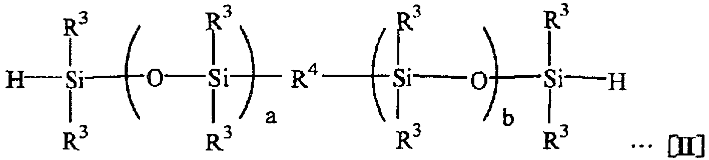

wherein each R³ is a monovalent group of 1 to 10 carbon atoms, is an unsubstituted or substituted saturated hydrocarbon group or an aromatic hydrocarbon group and may be the same or different in one molecule, a is an integer of 0 to 20, b is an integer of 0 to 20, and R⁴ is a divalent organic group of 1 to 30 carbon atoms or an oxygen atom,

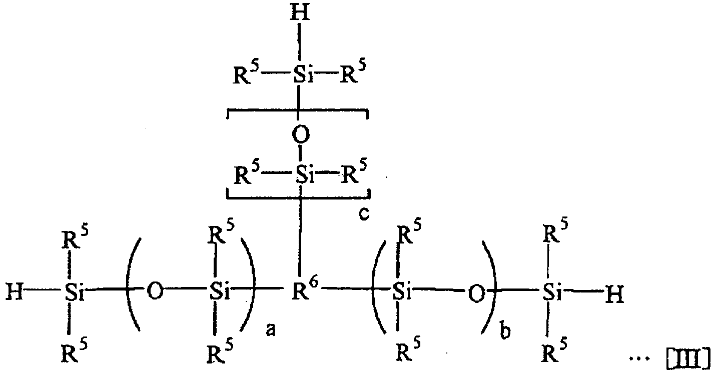

wherein each R⁵ is a monovalent group of 1 to 10 carbon atoms, is an unsubstituted or substituted saturated hydrocarbon group or an aromatic hydrocarbon group and may be the same or different in one molecule, a, b and c are each independently an integer of 0 to 20, and R⁶ is a trivalent organic group of 1 to 30 carbon atoms.

The fuel cell sealing member of the present invention comprises the rubber composition of the present invention.

The fuel cell of the present invention comprises a fuel cell sealing member comprising the rubber composition of the present invention.

The hard disk drive top cover gasket of the present invention and the gasket member for LIM molding of the present invention comprise the rubber composition of the present invention.

The hard disk drive of the present invention comprises a hard disk drive top cover gasket comprising the rubber composition of the present invention.

The sealing member for an electric wire connector of the present invention comprises the rubber composition of the present invention.

The electric wire connector of the present invention comprises a sealing member for an electric wire connector comprising the rubber composition of the present invention. The electric wire connector of the present invention is preferably an electric wire connector for automobiles.

### EFFECT OF THE INVENTION

The rubber composition of the present invention is suitable for LIM molding, and molded articles produced by using the rubber composition are excellent in sealing properties, heat resistance and acid resistance, have low reaction force, low hardness and low compression set and particularly have such high heat resistance that no crack occurs even when they are used under the conditions of high temperatures and high compression. The rubber composition of the present invention does not cause oil bleeding, blooming or the like, and can provide molded articles excellent in mechanical properties and resistance to outgassing. When the rubber composition is molded into a connector seal for an electric wire, the seal has excellent sealing properties and insertion properties for electric wires, and the rubber composition is suitable for a fuel cell sealing member, a gasket member for LIM molding and a sealing member for an electric wire connector. The fuel cell, the hard disk drive top cover gasket, the hard disk drive, the electric wire connector, etc. of the present invention are each provided with a molded product comprising the rubber composition of the present invention, and the molded product is excellent in sealing properties, heat resistance and acid resistance, has low reaction force, low hardness and low compression set, and particularly has such high heat resistance that no crack occurs even when it is used under the conditions of high temperatures and high compression.

### BRIEF DESCRIPTION OF THE DRAWINGS

Fig. 1 is a perspective view showing an example of a separator-integrated cell seal part for a fuel cell.
Fig. 2 is a schematic cross-sectional view taken on line A-A in Fig. 1

### DESCRIPTION OF REFERENCE NUMERALS

1: carbon, metallic or resin separator of separator-integrated cell for fuel cell
2: space
3: seal part of cell

### BEST MODE FOR CARRYING OUT THE INVENTION

The present invention is described in detail hereinafter.

### Rubber composition

The rubber composition according to the present invention comprises, as essential components, a specific ethylene/α -olefin/non-conjugated polyene copolymer [A] and calcined talc [B], and if necessary, contains surface-modified silica [C] and/or carbon black [D], and if necessary, further contains a SiH group-containing compound [E] having two SiH groups in one molecule and a SiH group-containing compound [F] having three SiH groups in one molecule.

### [A] Ethylene/α-olefin/non-conjugated polyene copolymer

The copolymer [A] for use in the present invention at least satisfies the following (a) to (e), and preferably satisfies the following (a) to (f):
(a) said copolymer is a copolymer of ethylene, an α-olefin and a non-conjugated polyene,
(b) the α-olefin has 3 to 20 carbon atoms,
(c) the weight ratio of ethylene units to α-olefin units is in the range of 35/65 to 95/5,
(d) the iodine value is in the range of 0.5 to 50,
(e) the intrinsic viscosity [η] is in the range of 0.01 to 5.0 dl/g as measured in decalin at 135°C, and
(f) the non-conjugated polyene is at least one kind of norbornene compound represented by the aforesaid general formula [I].

The copolymer [A] according to the present invention is a copolymer of ethylene, an α-olefin of 3 to 20 carbon atoms and a non-conjugated polyene, and is preferably a random copolymer thereof.

### α-Olefin

The α-olefin to constitute the copolymer [A] is an α-olefin of 3 to 20 carbon atoms. Examples of the α-olefins include propylene, 1-butene, 4-methyl-1-pentene, 1-hexene, 1-heptene, 1-octene, 1-nonene, 1-decene, 1-undecene, 1-dodecene, 1-tridecene, 1-tetradecene, 1-pentadecene, 1-hexadecene, 1-heptadecene, 1-nonadecene, 1-eicosene, 9-methyl-1-decene, 11-methyl-1-dodecene and 12-ethyl-1-tetradecene. Of these, α-olefins of 3 to 10 carbon atoms are more preferable, and in particular, propylene, 1-butene, 1-hexene or 1-octene is most preferably used. These α-olefins are used singly or in combination of two or more kinds.

### Non-conjugated polyene

Although the non-conjugated polyene to constitute the copolymer [A] is not specifically restricted, it is preferably a non-conjugated diene, more preferably at least one kind of norbornene compound represented by the following general formula [I].

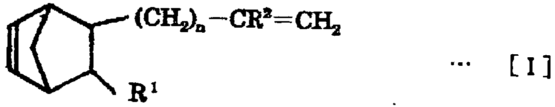

In the general formula [I], n is an integer of 0 to 10, R¹ is a hydrogen atom or an alkyl group of 1 to 10 carbon atoms, and R² is a hydrogen atom or an alkyl group of 1 to 5 carbon atoms.
Examples of the norbornene compounds represented by the general formula [I] include 5-vinyl-2-norbornene, 5-(2-propenyl)-2-norbornene, 5-(3-butenyl)-2-norbornene, 5-(1-methyl-2-propenyl)-2-norbornene, 5-(4-pentenyl)-2-norbornene, 5-(1-methyl-3-butenyl)-2-norbornene, 5-(5-hexenyl)-2-norbornene, 5-(1-methyl-4-pentenyl)-2-norbornene, 5-(2,3-dimethyl-3-butenyl)-2-norbornene, 5-(2-ethyl-3-butenyl)-2-norbornene, 5-(6-heptenyl)-2-norbornene, 5-(3-methyl-5-hexenyl)-2-norbornene, 5-(3,4-dimethyl-4-pentenyl)-2-norbornene, 5-(3-ethyl-4-pentenyl)-2-norbornene, 5-(7-octenyl)-2-norbornene, 5-(2-methyl-6-heptenyl)-2-norbornene, 5-(1,2-dimethyl-5-hexenyl)-2-norbornene, 5-(5-ethyl-5-hexenyl)-2-norbornene and 5-(1,2,3-trimethyl-4-pentenyl)-2-norbornene.

Of these, 5-vinyl-2-norbornene, 5- (2-propenyl) -2-norbornene, 5-(3-butenyl)-2-norbornene, 5-(4-pentenyl)-2-norbornene, 5-(5-hexenyl)-2-norbornene, 5-(6-heptenyl)-2-norbornene and 5-(7-octenyl)-2-norbornene are preferable. These norbornene compounds may be used singly or in combination of two or more kinds.

The non-conjugated polyene to constitute the copolymer [A] of the present invention may be a non-conjugated polyene other than the norbornene compound represented by the general formula [I]. The non-conjugated polyene employable is not specifically restricted, and the following linear non-conjugated dienes, alicyclic non-conjugated dienes and triene compounds may be mentioned. These non-conjugated polyenes may be used singly or in combination of two or more kinds. The non-conjugated polyene other than the norbornene compound represented by the general formula [I] may be used together with the norbornene compound represented by the general formula [I].

Examples of the linear non-conjugated dienes include 1,4-hexadiene, 3-methyl-1,4-hexadiene, 4-methyl-1,4-hexadiene, 5-methyl-1,4-hexadiene, 4,5-dimetnyl-1,4-hexadiene and 7-methyl-1,6-octadiene.

Examples of the cyclic non-conjugated dienes include 5-methylene-2-norbornene, 1-methyl-5-methylene-2-norbornene, 1-ethyl-5-methylene-2-norbornene, 5-ethylidene-2-norbornene, 5-isopropylidene-2-norbornene, 5-vinylidene-2-norbornene, 6-chloromethyl-5-isopropenyl-2-norbornene, dicyclopentadiene and methyltetrahydroindene.

Examples of the non-conjugated polyenes other than the above compounds include trienes, such as 2,3-diisopropylidene-5-norbornene, 2-ethylidene-3-isopropylidene-5-norbornene and 2-propenyl-2,2-norbornadiene.

### Composition and properties of copolymer [A]

In the copolymer [A] according to the present invention has a ratio of ethylene units to α-olefin units of in the range of 35/65 to 95/5, preferably 40/60 to 90/10, more preferably 45/55 to 85/15, particularly preferably 50/50 to 80/20, in terms of weight ratio.

When the weight ratio is in the above range, the obtainable rubber composition is capable of providing crosslinked rubber molded products which are excellent not only in heat aging resistance, strength properties and rubber elasticity but also in cold resistance and processability.

The copolymer [A] of the present invention has an iodine value of in the range of 0.5 to 50 (g/100 g), preferably 1 to 45, more preferably 1 to 43, particularly preferably 3 to 40 (g/100 g).

When the iodine value is in the above range, the obtainable rubber composition has high crosslinking efficiency, and is capable of providing crosslinked rubber molded products which are excellent not only in resistance to compression set but also in resistance to environmental degradation (heat aging resistance). If the iodine value exceeds the upper limit of the above range, the crosslink density sometimes becomes too high to thereby lower mechanical properties such as tensile elongation.

The copolymer [A] according to the present invention has an intrinsic viscosity [η ] of in the range of 0.01 to 5.0 dl/g, preferably 0.03 to 4.0 dl/g, more preferably 0.05 to 3.5 dl/g, particularly preferably 0.07 to 3.0 dl/g as measured in decalin at 135°C. An embodiment wherein the intrinsic viscosity [η] of the copolymer [A] is not more than 0.5 dl/g, preferably less than 0.3 dl/g, is preferable especially when the rubber composition is subjected to LIM molding. When the intrinsic viscosity [η] is in the above range, the obtainable rubber composition is capable of providing crosslinked rubber molded products which are excellent not only in strength properties and resistance to compression set but also in processability.

The copolymer [A] according to the present invention desirably has a low viscosity, that is, desirably has a complex viscosity (25°C, strain: 1%) of not more than 10⁵ Pa·S, preferably not more than 4000 Pa·S, more preferably not more than 2000 Pa·S, as measured by the use of a viscoelasticity measuring device MCR301 manufactured by Anton Paar (Australia).

### Process for preparing copolymer [A]

The copolymer [A] according to the present invention can be prepared by copolymerizing ethylene, an α-olefin and a non-conjugated polyene such as the aforesaid norbornene compound represented by the formula [I] in the presence of a polymerization catalyst. Specifically, the copolymer can be more preferably prepared such hitherto publicly known processes as described in, for example, "Polymer Production Process" (published by Kogyo Chosakai Publishing Co., Ltd., pp. 365-378), Japanese Patent Laid-Open Publication No. 71617/1997, Japanese Patent Laid-Open Publication No. 71618/1997, Japanese Patent Laid-Open Publication No. 208615/1997, Japanese Patent Laid-Open Publication No. 67823/1998, Japanese Patent Laid-Open Publication No. 67824/1998 and Japanese Patent Laid-Open Publication No. 110054/1998.

The polymerization catalysts preferably used include: a Ziegler catalyst comprising a compound of a transition metal, such as vanadium (V), zirconium (Zr) or titanium (Ti), and an organoaluminum compound (organoaluminum oxy-compound); and a metallocene catalyst comprising a metallocene compound of a transition metal selected from group IVB of the periodic table of elements and either an organoaluminum oxy-compound or an ionizing ionic compound.

Specifically, the copolymer [A] according to the present invention can be preferably prepared by copolymerizing ethylene, an α-olefin and the aforesaid non-conjugated polyene, particularly preferably a norbornene compound containing a vinyl group, in the presence of a catalyst containing, as main components, a vanadium compound (a) and an organoaluminum compound (b) described below, under the conditions of a polymerization temperature of 30 to 60°C, particularly preferably 30 to 50°C, a polymerization pressure of 4 to 12 kgf/cm², particularly preferably 5 to 8 kgf/cm², and a molar ratio of the amount of non-conjugated polyene fed to the amount of ethylene fed (non-conjugated polyene/ethylene) ranging from 0.01 to 0.2. The copolymerization is preferably carried out in a hydrocarbon medium.

The vanadium compound (a) is, for example, a vanadium compound represented by the general formula VO(OR)ₐX_{b} or V(OR)_{c}X_{d} (wherein R is a hydrocarbon group, 0≤a≤3, 0≤b≤3, 2≤a+b≤3, 0≤c≤4, 0≤d≤4 and 3≤c+d≤4) or an electron donor adduct thereof.

More specifically, there may be mentioned, for example, VOCl₃, VO(OC₂H₅)Cl₂, VO(OC₂H₅)₂Cl, VO(O-iso-C₃H₇)Cl₂, VO(O-n-C₄H₉)Cl₂, VO(OC₂H₅)₃, VOBr₃, VCl₄, VOCl₃, VO(O-n-C₄H₉)₃ and VCl₃·2OC₆H₁₂OH.

Examples of the organoaluminum compounds (b) include trialkylaluminums, such as triethylaluminum, tributylaluminum and triisopropylaluminum; dialkylaluminum alkoxides, such as diethylaluminumethoxide and dibutylaluminumbutoxide; alkylaluminum sesquialkoxides, such as ethylaluminum sesquiethoxide and butylaluminum sesquibutoxide;
partially alkoxylated alkylaluminums having an average composition represented by R_{0.5}Al (OR)_{0.5}; partially halogenated alkylaluminums, e.g., dialkylaluminum halides, such as diethylaluminum chloride, dibutylaluminum chloride and diethylaluminum bromide, alkylaluminum sesquihalides, such as ethylaluminum sesquichloride, butylaluminum sesquichloride and ethylaluminum sesquibromide, and alkylaluminum dihalides, such as ethylaluminum dichloride, propylaluminum dichloride and butylaluminum dibromide; partially hydrogenated alkyl aluminums, e.g., dialkylaluminum hydrides, such as diethylaluminum hydride and dibutylaluminum hydride, and alkylaluminum dihydrides, such as ethylaluminum dihydride and propylaluminum dihydride; and partially alkoxylated and halogenated alkylaluminums, such as ethylaluminum ethoxychloride, butylaluminum butoxychloride and ethylaluminum ethoxybromide.

### Other resin components

The resin component contained in the rubber composition according to the present invention is preferably only the above-mentioned ethylene/α-olefin/non-conjugated polyene copolymer [A]. However, a resin component other than the ethylene/α-olefin/non-conjugated polyene copolymer [A] may be contained in the composition within limits not detrimental to the objects of the present invention.

The resin component other than the copolymer [A] preferably used as an arbitrary component is, for example, an organopolysiloxane. The organopolysiloxane has a function of improving heat aging resistance of the rubber composition and contributes to improvement in heat aging resistance of fuel cell sealing parts, hard disk top cover gaskets, and sealing members for electric wire connectors.

When the rubber composition of the present invention contains the organopolysiloxane, the organopolysiloxane is contained in such an amount that the weight ratio of the ethylene/α -olefin/non-conjugated polyene copolymer:organopolysiloxane is preferably in the range of 99.9:0.1 to 5: 95, more preferably 99.9:0.1 to 60:40, still more preferably 99.9:0.1 to 70:30.

The organopolysiloxane is, for example, a compound having an average composition formula represented by the following formula (S):

R¹ₜSiO_{(4-t)/2} (S)

In the formula (S), R¹ is a monovalent hydrocarbon group of 1 to 10 carbon atoms, a part of or all of hydrogen atoms of the group may be replaced with cyano groups or halogen groups, and t is a number of 1.9 to 2.1.
R¹ in the above formula (S) is specifically an alkyl group, such as methyl group, ethyl group, propyl group, butyl group, hexyl group or octyl group, a cycloalkyl group, such as cyclopentyl group or cyclohexyl group, an alkenyl group, such as vinyl group, allyl group or propenyl group, a cycloalkenyl group, such as cyclopentenyl group or cyclohexenyl group, an aryl group, such as phenyl group, tolyl group or xylyl group, or an aralkyl group, such as benzyl group or phenylethyl group. In these groups, a part of or all of hydrogen atoms may be replaced with chlorine atoms, fluorine atoms or cyano groups.

Particularly preferable organopolysiloxane include an organopolysiloxane having a dimethylsiloxane unit in its main chain, and an organopolysiloxane in which a diphenylsiloxane unit having a phenyl group, a methylvinylsiloxane unit having a vinyl group, a methyl-3,3,3-trifluoropropylsiloxane unit having a 3,3,3-trifluoropropyl groups is introduced into a part of a main chain of dimethylpolysiloxane.

The organopolysiloxane preferably has two or more aliphatic unsaturated groups, such as alkenyl groups and cycloalkenyl groups, in one molecule, and the amount of the aliphatic unsaturated groups, particularly preferably vinyl groups, in R¹ is preferably in the range of 0.01 to 20% by mol, particularly preferably 0.02 to 10% by mol. The aliphatic unsaturated group may be present at the end of the molecular chain, at a halfway position of the molecular chain or at both thereof, it is preferably present at least at the end of the molecular chain. The end of the molecular chain may be capped with a trimethylsilyl group, a dimethylphenylsilyl group, a dimethylhydroxysilyl group, a dimethylvinylsilyl group, a trivinylsilyl group.

Examples of the organopolysiloxanes particularly preferably employable in the present invention include methylvinylpolysiloxane, methylphenylvinylpolysiloxane and methyltrifluoropropylvinylpolysiloxane.

The organopolysiloxane may be obtained by, for example, subjecting one or more kinds of organohalogenosilanes to (co) hydrolysis condensation or subjecting a cyclic polysiloxane (e.g., trimer or tetramer of siloxane) to ring-opening polymerization using an alkaline or acid catalyst. The resulting organopolysiloxane is basically a linear diorganopolysiloxane, but it may be a mixture of two or more kinds of organopolysiloxanes having different molecular structures.

The organopolysiloxane is available as a commercial product or can be synthesized by a publicly known process disclosed.

The degree of polymerization of the organopolysiloxane is preferably not less than 100, particularly preferably 3, 000 to 20, 000. The viscosity of the organopolysiloxane at 25°C is preferably not less than 100 centistokes (cSt), particularly preferably 100,000 to 100,000,000 cSt.

The rubber composition of the present invention may contain publicly known other rubbers as other resin components in combination with the ethylene/α-olefin/non-conjugated polyene copolymer [A], within limits not detrimental to the objects of the present invention. Examples of the rubbers include natural rubbers (NR), isoprene-based rubbers, such as isoprene rubber (IR), and conjugated diene-based rubbers, such as butadiene rubber (BR), styrene-butadiene rubber (SBR), acrylonitrile-butadiene rubber (NBR) and chloroprene rubber (CR). Moreover, hitherto publicly known ethylene/ α-olefin-based copolymer rubbers, such as an ethylene/propylene random copolymer (EPR), may be used, or an ethylene/α-olefin/non-conjugated polyene copolymer other than the copolymer [A] of the present invention may be used.

### [B] Calcined talc

The calcined talc [B] for use in the present invention acts as a reinforcing filler in the rubber composition. Although the calcined talc is not specifically restricted, it is desirable to preferably use calcined talc having an average particle diameter of 2 to 15 µm, preferably 6 to 9 µm.

The amount of the calcined talc [B] blended is desired to be preferably in the range of 2 to 50 parts by weight, more preferably 5 to 20 parts by weight, based on 100 parts by weight of the total amount of the resin components, namely the ethylene/α -olefin/non-conjugated polyene copolymer [A] and other resin components contained in the rubber composition. Blending the calcined talc [B] in the amount as described above allows the complex viscosity of the rubber composition in the molding process to be not more than 10000 Pa even when a reinforcing agent (filler) other than the calcined talc [B], such as surface modified silica [C] or carbon black [D] described below, is added. Furthermore, the resulting rubber composition is suitable also for LIM molding

### [C] Surface-modified silica

The surface-modified silica [C] preferably used in the present invention is obtained by surface-modifying precipitated silica (hydrous silicic acid), and has a BET specific surface area (i.e., indication of primary particle diameter) of 30 to 80 m²/g, preferably 40 to 60 m²/g, a particle diameter as measured by the Coulter counter method (i.e., indication of secondary particle diameter), of 1 to 4 µm, preferably 1.5 to 3 µm, and an M value of not less than 50.

As a raw material of the surface-modified silica [C] for use in the present invention, precipitated silica (hydrous silicic acid) is used. In addition to the precipitated silica, there are generally known gel-method silica, dry-process silica (anhydrous silicic acid), colloidal silica as silica. The gel-method silica has strong cohesive force, and secondary (agglomerated) particles of the gel-method silica are hard and difficult to separate from one another. Therefore, the gel-method silica has poor dispersibility and usually has a large BET specific surface area of 250 to 900 m²/g, and hence, the resulting rubber composition tends to be thickened, resulting in a problem of poor processability. The colloidal silica generally has a large primary particle diameter and a small BET specific surface area, and therefore, it has good processability. However, particles of the colloidal silica themselves are monodispersed, and hence, there is a problem that an effect of imparting reinforcing properties to the rubber composition cannot be expected. Secondary (agglomerated) particles of the dry-process silica easily become loose, but the dry-process silica has poor dispersibility in rubber and usually has a relatively large BET specific surface area of 100 to 400 m²/g, resulting in a problem of insufficient processability. For these reasons, the precipitated silica is most suitable as a raw material of the surface-modified silica [C] used in the present invention.

Examples of the surface modification treatments of the precipitated silica include surface treatments with hexamethyldisilazane, chlorosilane, alkoxysilane, dimethyldichlorosilane, octylsilane and dimethyl silicone oil. By virtue of these surface treatments, an effect of suppressing thickening of the rubber composition can be expected when the surface-modified silica [C] is added to the rubber composition.

In addition to the above surface treatment, the surface-modified silica [C] for use in the present invention may be further subjected to mechanical treatment such as shear fracture in order to inhibit steric hindrance of the silica surface caused by the surface treatment.

The degree of surface modification treatment of silica is represented by an M value, and the M value of the surface-modified silica [C] for use in the present invention is desirably not less than 50. The M value is a general indicator of the degree of surface modification treatment of silica, and is a value represented by a concentration of a methanol aqueous solution (% by volume of methanol) given when methanol aqueous solutions having different methanol concentrations are added to silica that is a measurement target and the silica begins to have affinity (begins to become wet).

Theamountofthesurface-modifiedsilica [C] added is preferably in the range of 20 to 60 parts by weight based on 100 parts by weight of the resin components contained in the rubber composition.

### [D] Carbon black

The carbon black [D] preferably used in the present invention has an adsorbed amount of iodine of not more than 80 mg/g, preferably 15 to 40 mg/g, an average particle diameter of not more than 250 nm, preferably 40 to 100 nm, and an absorbed amount of DBP of 10 to 300 cm³/100 g, preferably 40 to 150 cm³/100 g. As the carbon black, commercially available carbon black of FEF grade, GPF grade, SRF grade may be used. The carbon black [D] acts as a reinforcing agent in the rubber composition.

Here, the adsorbed amount of iodine and the absorbed amount of DBP are typical indicators of properties of carbon black and are measured in accordance with JIS K6217. The adsorbed amount of iodine is an indicator of the total surface area of carbon black including pores of the carbon black. The absorbed amount of DBP has a correlation with the structure. As for the adsorbed amount of iodine and the absorbed amount of DBP, the magnitudes of these property values have great influence on the reinforcing properties, extrusion properties, dispersibility, coloring power, viscosity and electrical conduction properties when the carbon black is added to the rubber composition.

The particle diameter indicates an average particle diameter of small spherical components forming carbon black agglomeratedpairs, as measured and calculated with an electron microscope image of the spherical components, and closely relates to the reinforcing properties and the degree of black when the carbon black is added to the rubber composition.

On this account, when carbon black used has an adsorbed amount of iodine, an average particle diameter and an absorbed amount of DBP any one of which deviates from the above conditions, sufficient reinforcing properties cannot be exerted, or even if reinforcing properties are exerted, the viscosity of the material of the rubber composition may become too high, and the moldability in LIM molding is sometimes deteriorated.

The amount of the carbon black [D] added is desired to be in the range of 5 to 60 parts by weight, preferably 5 to 30 parts by weight, based on 100 parts by weight of the resin components contained in the rubber composition (total amount of the ethylene/α -olefin/non-conjugated polyene copolymer [A] and other resin components contained in the rubber composition).

In the present invention, by using the surface-modified silica [C] and/or the carbon black [D] in combination with the calcined talc [B] to prepare a rubber composition, the resulting rubber composition exhibits more excellent reinforcing properties, and molded products obtained from the rubber composition can be effectively prevented from occurrence of crack even under the high-compression conditions at high temperatures.

### Other rubber reinforcing agents and fillers

The rubber composition of the present invention may contain a rubber reinforcing agent and a filler other than the calcined talc [B], the surface-modified silica [C] and the carbon black [D], when needed.

The rubber reinforcing agent has an effect of enhancing mechanical properties of a crosslinked (vulcanized) rubber, such as tensile strength, tear strength and abrasion resistance. The rubber composition of the present invention contains the calcined talc [B], and therefore, even if the composition does not contain other reinforcing agents, reinforcing effect is exerted to a certain extent. However, in order to further improve mechanical properties according to the desired properties, the surface-modified silica [C], the carbon black [D], or other rubber reinforcing agents or fillers may be added.

Examples of other rubber reinforcing agents that may be added include silica other than the aforesaid surface-modified silica [C], carbon black other than the aforesaid carbon black [D], and finely divided silicic acid.

Examples of other fillers that may be added include light calcium carbonate, heavy calcium carbonate, clay, talc (uncalcined talc) and diatomaceous earth. These rubber reinforcing agents and inorganic fillers may be used singly or in combination of two or more kinds. Although the kinds and the amounts of the rubber reinforcing agents and the inorganic fillers added may be properly selected according to the use purpose and the desired properties, the total amount of other rubber reinforcing agents and fillers and the components [B], [C] and [D] is usually not more than 200 parts by weight, preferably not more than 100 parts by weight, based on 100 parts by weight of the total amount of the copolymer [A] and other resin components that are added when needed.

### Crosslinking agent

The rubber composition of the present invention desirably contains a crosslinking agent. As the crosslinking agent, a publicly known crosslinking agent maybe appropriately used, but it is desirable to use a crosslinking agent which exhibits compatibility or good dispersibility in the copolymer [A]. Especially when the non-conjugated polyene component of the copolymer [A] is the aforesaid norbornene compound represented by the formula [I], it is more preferable to use a compound having a SiH group to be a crosslinking point.

When a compound having a SiH group to be a crosslinking point is used as a crosslinking agent, such crosslinking agents may be used singlyorin combination of two ormore kinds. In the present invention, it is particularly preferable to use a combination of a SiH group-containing compound [E] represented by the following general formula [II] and having two SiH groups in one molecule and a SiH group-containing compound [F] represented by the following general formula [III] and having three SiH groups in one molecule.

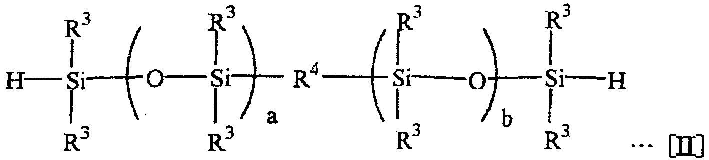

In the formula (II), each R³ is a monovalent group of 1 to 10 carbon atoms, is anunsubstitutedor substituted saturated hydrocarbon group or an aromatic hydrocarbon group and may be the same or different in one molecule, a is an integer of 0 to 20, b is an integer of 0 to 20, and R⁴ is a divalent organic group of 1 to 30 carbon atoms or an oxygen atom.

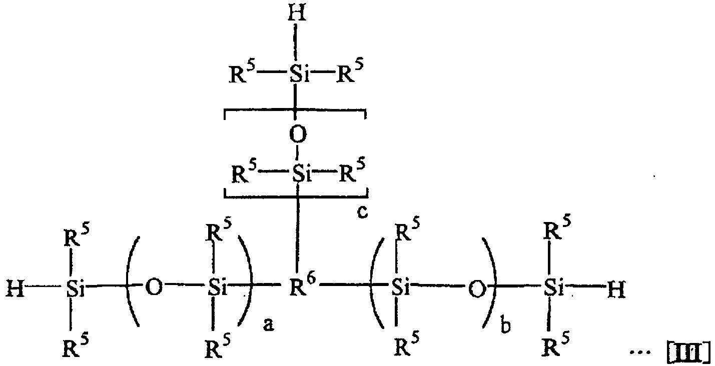

In the formula [III], each R⁵ is a monovalent group of 1 to 10 carbon atoms, is an unsubstituted or substituted saturated hydrocarbon group or an aromatic hydrocarbon group and may be the same or different in one molecule, a, b and c are each independently an integer of 0 to 20, and R⁶ is a trivalent organic group of 1 to 30 carbon atoms.

### [E] SiH group-containing compound having two SiH groups in one molecule

The SiH group-containing compound [E] that is preferably used in the present invention is a compound represented by the above formula [II], has SiH groups at the both ends of a molecule and has two SiH groups per molecule. Examples of R³ in the general formula [II] include methyl group, ethyl group, propyl group, isopropyl group, butyl group, amyl group, cyclopentyl group, hexyl group, cyclohexyl group, octyl group, chloromethyl group, 2-chloroethyl group, 3-chloropropyl group, phenyl group, phenylmethyl group, 2-phenylethyl group and 2-phenylpropyl group. Preferable are methyl group, ethyl group and phenyl group a is an integer of 0 to 20, and b is an integer of 0 to 20. a and b are each preferably not more than 10, more preferably not more than 5, particularly preferably not more than 2, and it is most preferable that a and b are equal to each other and are each not more than 2.

Examples of the SiH group-containing compounds [E] represented by the general formula [II] and having two SiH groups in one molecule are given below. R⁴ in the general formula [II] is a divalent organic group of 1 to 30 carbon atoms or an oxygen atom, and examples of the divalent organic groups correspond to divalent groups in the compounds specifically exemplified below. These SiH group-containing compounds [E] may be used singly or as a mixture of two or more kinds of the compounds. The SiH group-containing compound [E] may be synthesized by a publicly known process disclosed.

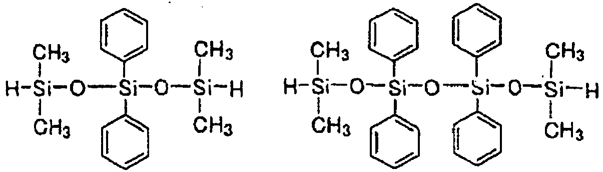

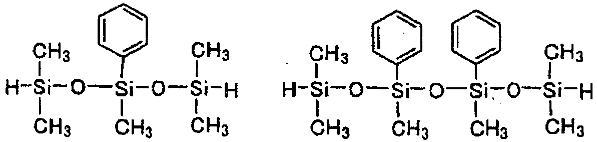

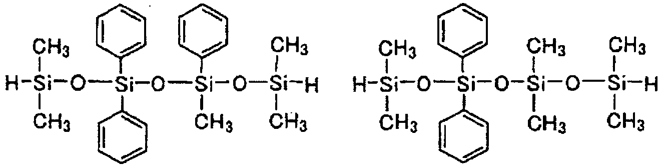

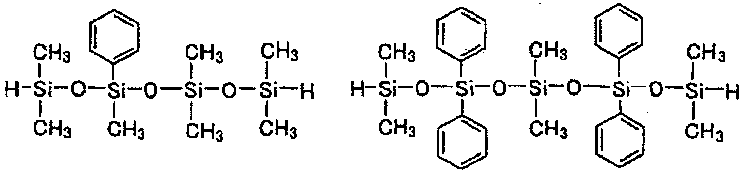

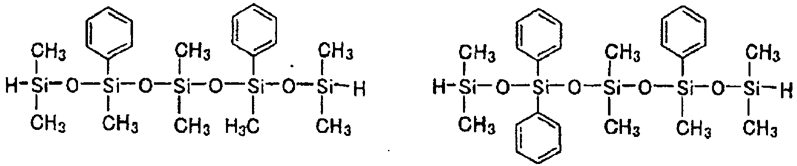

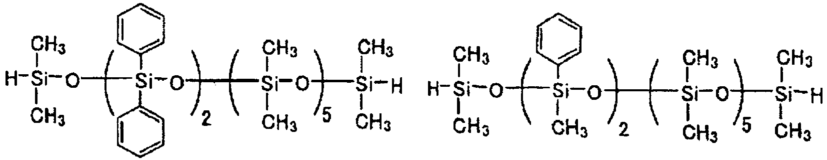

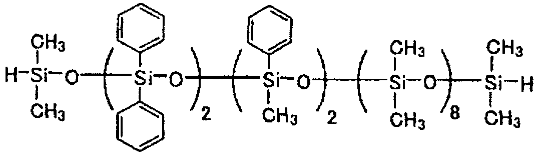

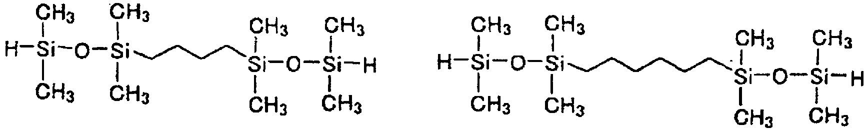

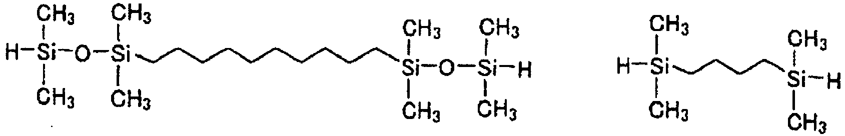

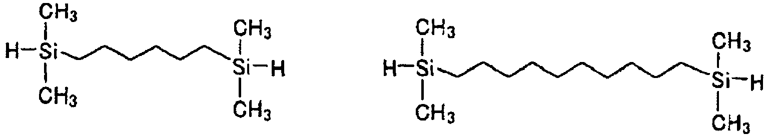

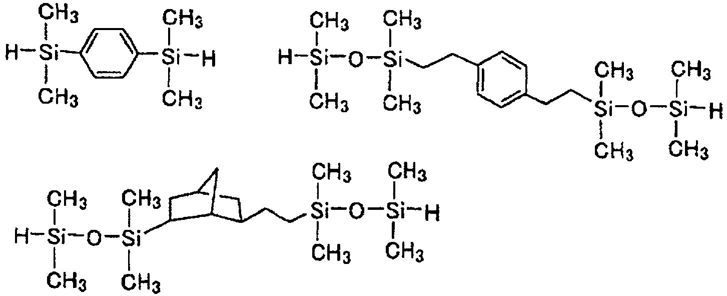

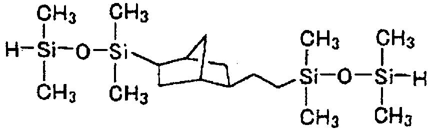

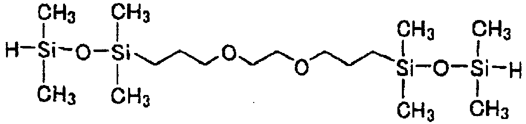

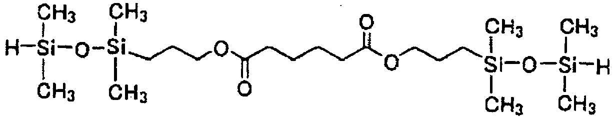

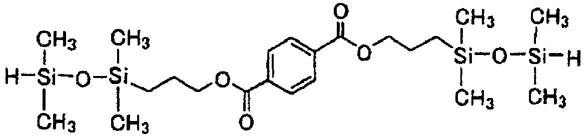

Of these, a compound represented by the following formula [II-1] is particularly preferable.

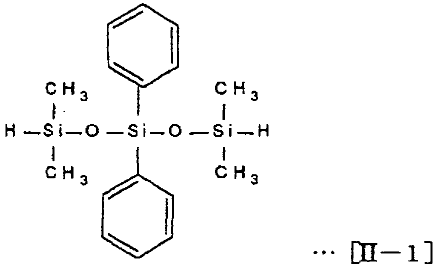

The SiH group-containing compound [E] having two SiH groups in one molecule is preferably contained in the rubber composition in such an amount as to give 0.2 to 10 hydrogen atoms bonded to silicon atoms based on one aliphatic unsaturated bond contained in the resin components in the rubber composition.

In the rubber composition of the present invention, the content of the SiH group-containing compound [E] having two SiH groups in one molecule is preferably in the range of 2 to 15 parts by weight, more preferably 3 to 8 parts by weight, based on 100 parts by weight of the total amount of the ethylene/α-olefin/non-conjugated polyene copolymer [A] and other resin components, from the viewpoint of rubber hardness of the obtainable molded product, etc.

When the SiH group-containing compound [E] having two SiH groups in one molecule is added alone to the ethylene/α -olefin/non-conjugated polyene copolymer [A], the obtainable rubber composition can suppress crosslink density to a certain extent, and the obtainable molded product has excellent elongation properties. However, this rubber composition particularly has high compression set at a low temperature (-30°C) and is sometimes poor in recovery properties.

### [F] SiH group-containing compound having three SiH groups in one molecule

The SiH group-containing compound [F] that is preferably used in the present invention is a compound represented by the aforesaid formula [III], has SiH groups at three ends of a molecule and has three SiH groups in one molecule. Examples of R⁵ in the general formula [III] are the same as those of R³ in the general formula [II], and there may be specifically mentioned, for example, methyl group, ethyl group, propyl group, isopropyl group, butyl group, amyl group, cyclopentyl group, hexyl group, cyclohexyl group, octyl group, chloromethyl group, 2-chloroethyl group, 3-chloropropyl group, phenyl group, phenylmethyl group, 2-phenylethyl group and 2-phenylpropyl group. Preferable are methyl group, ethyl group and phenyl group. a, b and c are each independently an integer of 0 to 20, and a, b and c are each preferably not more than 10, more preferably not more than 5, particularly preferably not more than 2, and it is most preferable that a, b and c are equal to one another and are each not more than 2. R⁶ in the general formula [III] is a trivalent organic group having 1 to 30 carbon atoms, preferably a trivalent organic group having 1 to 30 carbon atoms and containing silicon.

Particularly preferable examples of the SiH group-containing compounds [F] having three SiH groups in one molecule include a compound represented by the following formula [III-1].

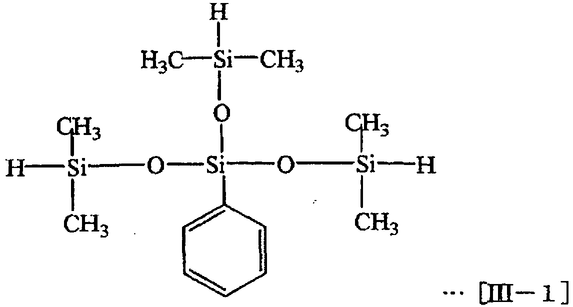

In the rubber composition of the present invention, the content of the SiH group-containing compound [F] having three SiH groups in one molecule is preferably in the range of 0.1 to 2 parts by weight, more preferably 0.3 to 1.4 parts by weight, based on 100 parts by weight of the total amount of the ethylene/α-olefin/non-conjugated polyene copolymer [A] and other resin components.

Use of the SiH group-containing compounds [E] and [F] in combination as the crosslinking agents is preferable from the viewpoints that the resulting rubber composition has good moldability, is excellent in heat resistance, barrier properties and sealing properties, has low compression set at a high temperature and a low temperature, is excellent in recovery properties, and can be favorably used for a fuel cell sealing member, a gasket member for LIM molding, an electric wire connector sealing member, etc.

When the SiH group-containing compound [F] having three SiH groups in one molecule is added alone to the ethylene/α -olefin/non-conjugated polyene copolymer [A], the obtainable rubber composition undergoes three-dimensional crosslinking and is enhanced in rubber properties such as mechanical strength. However, this rubber composition has high compression set at a high temperature (150°C) and a low temperature (-30°C), has poor recovery properties, tends to cause scorching and sometimes has poor handleability during molding.

### Rubber composition

The rubber composition of the present invention contains, as essential components, a resin component essentially containing the ethylene/α-olefin/non-conjugated polyene copolymer [A] and the calcined talc [B], and contains, if necessary, the surface-modified silica [C] and/or the carbon black [D], and crosslinking agents such as the SiH group-containing compounds [E] and [F]. Moreover, the rubber composition further contains, if necessary, the later-described other components, such as catalyst, reaction inhibiter, hitherto publicly known inorganic filler, softener, anti-aging agent, processing aid, vulcanization accelerator, organic peroxide, crosslinking assistant, foaming agent, colorant, dispersing agent and flame retardant.

When the rubber composition of the present invention does not contain the carbon black [D] that is a black filler, the rubber composition can be made to have a desired color tone by using a colorant in combination, and by the use of this rubber composition, a molded product having a desired color tone can be produced.

### Preparation of rubber composition

The rubber composition of the present invention may be prepared by, for example, the following process. The copolymer [A] and if necessary other resin components are kneaded together with the calcined talc [B] and if necessary rubber reinforcing agents and fillers including the surface-modified silica [C] and/or the carbon black [D], and other additives such as a softener, at a temperature of preferably 50 to 180°C for 3 to 10 minutes using an internal mixer (closed mixing machine), such as a Banbury mixer, a kneader, a planetary mixer or an intermix, or a kneading device, such as a two-roll mill or a three-roll mill. Thereafter, a crosslinking agent, such as a SiH group-containing compound, and if necessary, a catalyst, a reaction inhibitor, a vulcanization accelerator and a crosslinking assistant as described later are added and kneaded using a roll, such as an open roll, or a kneader at a roll temperature of not higher than 100°C for 1 to 30 minutes, followed by sheeting.

When the kneading is performed at low temperature using an internal mixer, all of the components for the rubber composition may be mixed at the same time and kneaded.

### Crosslinking method

### Catalyst

In the case where crosslinking is carried out using a crosslinking agent such as a SiH group-containing compound in the prepartion of the rubber composition of the present invention, a catalyst used for the crosslinking is an addition reaction catalyst, and it accelerates addition reaction (e.g., hydrosilylation reaction of alkene) of an alkenyl group of the resin components including the copolymer [A] with a SiH group of the SiH group-containing compound.

The catalyst usually used is, for example, an addition reaction catalyst comprising a platinum group element, such as a platinum-based catalyst, a palladium-based catalyst or a rhodium-based catalyst, and in the present invention, a platinum-based catalyst is preferable. It is desirable to use a complex comprising a group 8 element metal of the periodic table, such as a platinum-based catalyst, particularly preferably a complex of platinum and a compound containing a vinyl group and/or a carbonyl group.

The compound containing a carbonyl group is preferably a carbonyl compound, an octanal compound. Examples of the complexes of the compounds and platinum include a platinum-carbonyl complex, a platinum-octanal complex, a platinum-carbonylbutylcyclosiloxane complex and a platinum-carbonylphenylcyclosiloxane complex.

The compound containing a vinyl group is preferably a vinyl group-containing organosiloxane. Examples of the complexes of the compounds and platinum include a platinum-divinyltetramethyldisiloxane complex, a platinum-divinyltetraethyldisiloxane complex, a platinum-divinyltetrapropyldisiloxane complex, a platinum-divinyltetrabutyldisiloxane complex and a platinum-divinyltetraphenyldisiloxane complex.

Of the vinyl group-containing organosiloxanes, a vinyl group-containing cyclic organosiloxane is preferable. Examples of the complexes of the compounds and platinum include a platinum-vinylmethylcyclosiloxane complex, a platinum-vinylethylcyclosiloxane complex and a platinum-vinylpropylcyclosiloxane complex.

The vinyl group-containing organosiloxane itself may be used for a ligand to a metal, and besides, it may be used as a solvent for coordinating other ligands. Particularly preferred as catalyst is a complex with a ligand derived from the aforesaid carbonyl group-containing compound, which complex is obtained in the presence of the vinyl group-containing organosiloxane as a solvent.

Examples of such complexes include a vinylmethylcyclosiloxane solution of a platinum-carbonyl complex, a vinylethylcyclosiloxane solution of a platinum-carbonyl complex, a vinylpropylcyclosiloxane solution of a platinum-carbonyl complex, a divinyltetramethyldisiloxane solution of a platinum-carbonyl complex, a divinyltetraethyldisiloxane solution of a platinum-carbonyl complex, a divinyltetrapropyldisiloxane solution of a platinum-carbonyl complex, a divinyltetrabutyldisiloxane solution of a platinum-carbonyl complex, and a divinyltetraphenyldisiloxane solution of a platinum-carbonyl complex.

The catalysts comprising these complexes may further contain components other than the compound containing a vinyl group and/or a carbonyl group. For example, the catalysts may contain a solvent other than the compound containing a vinyl group and/or a carbonyl group. Examples of such solvents include various alcohols and xylene, though the solvents are not limited thereto.

Examples of the alcohols include aliphatic saturated alcohols, such as methanol and ethanol; aliphatic unsaturated alcohols, such as allyl alcohol and crotyl alcohol; alicyclic alcohols, such as cyclopentanol and cyclohexanol; aromatic alcohols, such as benzyl alcohol and cinnamyl alcohol; and heterocyclic alcohols, such as furfuryl alcohol.

The catalyst containing an alcohol as a solvent is, for example, a platinum-octanal/octanol complex. The catalyst containing such a solvent has advantages in that, for example, handling of the catalyst and mixing of the catalyst with the rubber composition are facilitated.

Of the above-mentioned various catalysts, preferable are a vinylmethylcyclosiloxane solution of a platinum-carbonyl complex (particularly preferable is a complex represented by the following chemical formula 1), a platinum-vinylmethylcyclosiloxane complex (particularly preferable is a complex represented by the following chemical formula 2), a platinum-divinyltetramethyldisiloxane complex (particularly preferable is a complex represented by the following chemical formula 3), a platinum-octanal/octanol complex from the viewpoint of practical use. Of these, particularly preferable is a platinum-carbonylvinylmethylcyclosiloxane complex.

Chemical formula 1: Pt⁰·CO· (CH₂=CH(Me)SiO)₄
Chemical formula 2: Pt⁰·(CH₂=CH(Me)SiO)₄
Chemical formula 3: Pt⁰-1.5[(CH₂=CH(Me)₂Si)₂O]
The proportion of the periodic table group 8 element metal (preferably platinum) contained in these catalysts is usually in the range of 0.1 to 10% by weight, preferably 0.1 to 5% by weight, more preferably 0.1 to 4% by weight, particularly preferably 0.1 to 3.5% by weight.

The catalyst is used in an amount of 0.1 to 100,000 ppm by weight, preferably 0.1 to 10,000 ppm by weight, more preferably 0.1 to 5,000 ppm by weight, particularly preferably 0.1 to 1,000 ppm by weight, based on the total amount of the resin components, that is, the total amount of the copolymer [A] and other resin components that are added when needed, though the amount of the catalyst is not specifically restricted. Use of the catalyst in an amount in the above range gives a rubber composition capable of forming crosslinked rubber molded products which have moderate crosslink density and are excellent in strength properties and elongation properties. Use of the catalyst in an amount exceeding 100,000 ppm by weight is undesirable because of disadvantageous cost. The crosslinked rubber molded product may be also obtained by irradiating an uncrosslinked rubber molded product of the rubber composition containing no catalyst with light, γ-rays, electron beams.

In the crosslinking of the rubber composition of the present invention, both of addition crosslinking and radical crosslinking may be carried out by using an organic peroxide in addition to the above catalyst. The organic peroxide is used in an amount of 0.1 to 10 parts by weight based on 100 parts by weight of the resin components. As the organic peroxide, a hitherto publicly known organic peroxide that is usually used for crosslinking of rubbers is employable.

### Reaction inhibitor

In the crosslinking, a reaction inhibitor is preferably used together with the above catalyst. Examples of the reaction inhibitors include benzotriazole, ethynyl group-containing alcohols, such as ethynylcyclohexanol, acrylonitrile, amide compounds, such as N,N-diallylacetamide, N,N-diallylbenzamide, N,N,N',N'-tetraallyl-o-phthalic acid diamide, N,N,N',N'-tetraallyl-m-phthalic acid diamide and N,N,N',N'-tetraallyl-p-phthalic acid diamide, sulfur, phosphorus, nitrogen, amine compounds, sulfur compounds, phosphorus compounds, tin, tin compounds, tetramethyltetravinylcyclotetrasiloxane, and organic peroxides, such as hydroperoxide.

The reaction inhibitor is used in an amount of 0 to 50 parts by weight, usually 0.0001 to 50 parts by weight, preferably 0.0001 to 30 parts by weight, more preferably 0.0001 to 20 parts by weight, still more preferably 0.0001 to 10 parts by weight, particularly preferably 0.0001 to 5 parts by weight, based on 100 parts by weight of the total amount of the copolymer [A] and other resin components that are added when needed. Use of the reaction inhibitor in an amount exceeding 50 parts by weight is undesirable because of disadvantageous cost.

The rubber composition of the present invention may contain additives, such as hitherto publicly known rubber reinforcing agents and inorganic fillers other than the calcined talc [B], the surface-modified silica [C] and the carbon black [D], a softener, an anti-aging agent, a processing aid, a vulcanization accelerator, an organic peroxide, a crosslinking assistant, a foaming agent, a foaming assistant, a colorant, a dispersing agent and a flame retardant according to the intended use of the crosslinked product, within limits not detrimental to the objects of the present invention.

As the softener, a publicly known softener usually used for rubbers is employable. Examples of such softeners include petroleum-based softeners, such as process oil, lubricating oil, paraffin, liquid paraffin, petroleum asphalt and vaseline; coal tar-based softeners, such as coal tar and coal tar pitch; fatty oil-based softeners, such as castor oil, linseed oil, rapeseed oil and coconut oil; waxes, such as beeswax, carnauba wax and lanolin; fatty acids and fatty acid salts, such as ricinolic acid, palmitic acid, barium stearate, calcium stearate and zinc laurate; synthetic polymers, such as petroleum resin, atactic polypropylene and coumarone-indene resin; and other softeners, such as tall oil and factice. Of these, petroleum-based softeners are preferably used, and process oil is particularly preferably used. The amount of the softener added is properly selected according to the use purpose of the crosslinked product. These softeners may be used singly or in combination of two or more kinds.

As the anti-aging agent, any of hitherto publicly known anti-aging agents is employable, and examples thereof include amine-based anti-aging agents, hindered phenol-based anti-aging agents and sulfur-based anti-aging agents. The anti-aging agent is used in such an amount that the objects of the present invention are not impaired. The anti-aging agents given below as examples may be used singly or in combination of two or more kinds even in the same kind or different kinds of the amine-based anti-aging agents, the hindered phenol-based anti-aging agents and the sulfur-based anti-aging agents.

Examples of the amine-based anti-aging agents include diphenylamines and phenylenediamines. In particular, 4,4'-(α,α -dimethylbenzyl)diphenylamine and
N,N'-di-2-naphthyl-p-phenylenediamine are preferable.

As the hindered phenol-based anti-aging agents, phenolic compounds, such as tetrakis[methylene-3-(3',5'-di-t-butyl-4'-hydroxyphenyl)propiona te]methane and 3,9-bis[2-(3-(3-t-butyl-4-hydroxy--5-methylphenyl)propionyloxy}-1 ,1-dimethylethyl]-2,4,8,10-tetraoxaspiro[5,5]undecane are particularly preferable.

As the sulfur-based anti-aging agents, 2-mercaptobenzimidazole, zinc salt of 2-mercaptobenzimdazole, 2-mercaptomethylbenzimidazole, zinc salt of 2-mercaptomethylbenzimidazole, and pentaerythritol-tetrakis-(β-laurylthiopropionate) are particularly preferable.

As the processing aid, a publicly known compound that is usually used for processing rubbers is employable. Examples of such processing aids include higher fatty acids, such as ricinolic acid, stearic acid, palmitic acid and lauric acid; salts of high fatty acids, such as barium stearate, zinc stearate and calcium stearate; and esters of higher fatty acids such as ricinolic acid, stearic acid, palmitic acid and lauric acid. The processing aid is used in an amount of not more than 10 parts by weight, preferably not more than 5 parts by weight, based on 100 parts by weight of the total amount of the copolymer [A] and other resin components that are added when needed. However, it is desirable to properly determine the optimum amount according to the property values required.

When an organic peroxide is used in the crosslinking of the rubber composition of the present invention, a crosslinking assistant is preferably used in combination with organic peroxide. Examples of the crosslinking assistants include sulfur, quinone dioxime-based compounds, such as p-quinone dioxime, methacrylate-based compounds, such as polyethylene glycol dimethacrylate, allyl-based compounds, such as diallyl phthalate and triallyl cyanurate, maleimide-based compounds, and divinylbenzene. Such a crosslinking assistant is used in an amount of 0.5 to 2 mol based on 1 mol of the organic peroxide used, preferably in an amount nearly equimolar to the organic peroxide.

### Fuel cell sealing member, hard disk drive top cover gasket, sealing member for electric wire connector

### Molding and crosslinking method

Since the rubber composition of the present invention described above is excellent not only in mechanical properties but also in heat resistance, it can be particularly favorably used for a fuel cell sealing member, a hard disk drive top cover gasket, a sealing member for an electric wire connector. The rubber composition of the present invention is particularly suitable for LIMmolding, but molded products of the rubber composition may be also produced by other molding methods.

The fuel cell sealing member, the hard disk drive top cover gasket and the sealing member for an electric wire connector of the present invention (referred to as "respective members of the present invention" hereinafter) can exhibit their characteristics most markedly when they are used as crosslinked rubber molded products.

In the production of a crosslinked rubber molded product from the rubber composition of the present invention, it is preferable that an uncrosslinked rubber composition is first prepared by the aforesaid preparation process, then the rubber composition is molded into the intended shape, and the molded product is crosslinked, similarly to the case where general rubbers are usually vulcanized (crosslinked).

The composition of the present invention prepared as above is molded into the intended shapes by various molding methods using an LIM molding machine, an injection molding machine, a transfer molding machine, a press molding machine, an extrusion molding machine, a calender roll, an ink jet forming machine, a screen printing machine. Of these molding machines, the LIM molding machine is preferable for producing the desired respective members of the present invention from the viewpoints of thickness accuracy and high-speed molding. Moreover, injection molding and compression molding are also preferable.

The crosslinking may be carried out simultaneously with molding of the rubber composition, or may be carried out by introducing the molded product into a vulcanizing bath.

For example, molding and crosslinking may be carried out in the following manner. The rubber composition of the present invention is obtained by mixing the components using any of various kneading devices, such as a three-mill roll, an open roll, a two-open roll, a Banbury mixer, an internal mixer, a kneader, a planetary mixer and a high-shear mixer. The rubber composition is then molded under the crosslinking conditions of 80 to 230°C, preferably 100 to 180°C, and then, if necessary, the resulting crosslinked molded product is subjected to heat treatment (secondary vulcanization) in an air oven, such as a gear oven or a constant temperature oven, at 100 to 230°C, preferably 120 to 150°C, for 0.5 to 24 hours. The crosslinking or the secondary crosslinking (secondary vulcanization) may be carried out by irradiation with light, γ-rays, electron beams, and the crosslinking may be carried out at ordinary temperature. Through the above process, crosslinked rubber molded products, namely the respective members of the present invention, are obtained.

In this crosslinking stage, the crosslinking may be carried out with or without a mold. When a mold is not used, the steps of molding and cross linking are usually carried out continuously. Usable heating means in the vulcanizing bath include a heating bath using hot air, glass bead fluidized bed, UHF (ultra-high frequency electromagnetic waves), steam.

### LIM molding

In the case where the rubber composition of the present invention is applied particularly to LIM molding, it is preferable that preparation of a composition containing resin components including the copolymer [A] and a crosslinking agent and that of a composition containing resin components including the copolymer [A] and a catalyst are carried out and those two compositions are then mixed in an LIM molding device to prepare and mold the rubber composition of the present invention. Here, components other than the resin components, the crosslinking agent and the catalyst may be contained in any one of the compositions or both of the compositions.

Specifically, the copolymer [A], other resin components, and additives, such as rubber reinforcing agents including the components [B] and [C], a crosslinking agent, an inorganic filler and a softener, are kneaded for 3 to 10 minutes by the use of an internal mixer (closed mixing machine), such as a Banbury mixer, a kneader or an intermix, or a mixing machine, such as a planetary mixer, to prepare a liquid rubber composition (1), with the proviso that the kneading machine used is properly selected according to the viscosity of the materials. Separately, the copolymer [A], other resin components, additives, such as a rubber reinforcing agent, an inorganic filler and a softener, the aforesaid catalyst, and if necessary, a reaction inhibitor are kneaded for 3 to 10 minutes to prepare a liquid rubber composition (2). Defoaming is carried out, when needed. Subsequently, the liquid rubber composition (1) and the liquid rubber composition (2) are placed in an exclusive pail can that can be directly connected to an LIM molding device or a cartridge that can be directly connected to an LIM molding device, then allowed to pass through a metering device and a mixing device, and subjected to LIM molding to obtain the respective members of the present invention.

### Fuel cell sealing member

For fuel cells, it is important to seal a cell, and this seal needs to be excellent particularly in gas barrier properties. An example of the shape of the seal is described with reference to the drawings.

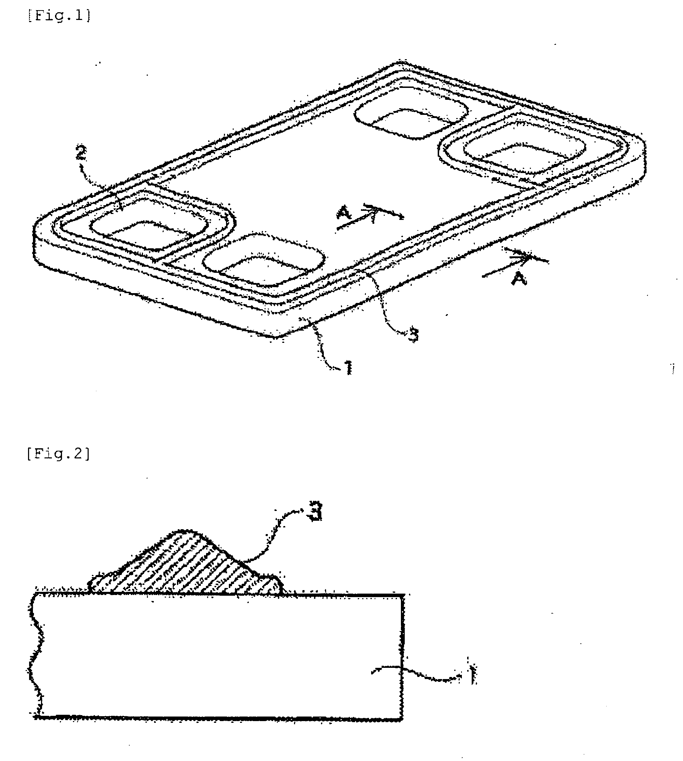

The sealing member has, for example, such a shape as indicated by reference numeral 3 in Fig. 1 and Fig. 2. The sealing member has such a planar outer shape as indicated by reference numeral 3 in Fig. 1. In Fig. 1 and Fig. 2, reference numeral 1 indicates a carbon, metallic or resin separator, and reference numeral 3 indicates a sealing member. Reference numeral 2 in Fig. 1 indicates a space.

The fuel cell sealing member of the present invention preferably has no void caused by foaming, that is, the fuel cell sealing member is preferably so-called void-free.

The fuel cell sealing member of the present invention desirably has a volume resistivity of not less than 1×10¹⁰ Ω·cm. The volume resistivity is one of properties required for sealing members used in electrical or electronic parts, and is an indicator of electrical insulation properties. The volume resistivity is more preferably not less than 1×10¹² Ω·cm, and a sealing member having such a volume resistivity exhibits preferred performance as a sealing member. The volume resistivity is measured in accordance with SRIS2301-1969 using a sheet having a thickness of 1 mm obtained by press-crosslinking a rubber composition at a pressure of 40 kgf/cm² and a temperature of 150°C for 10 minutes.

The fuel cell of the present invention comprises the fuel cell sealing member of the present invention.

### Hard disk drive top cover gasket

The hard disk drive top cover gasket of the present invention preferably comprises, at the gasket portion, a crosslinked rubber sheet obtained by the aforesaid method and having a compression set of not more than 50%, and the gasket exhibits sufficient sealing properties as a manufactured article. Moreover, the crosslinked rubber sheet preferably has a tensile strength of not less than 2 MPa and a tensile elongation at break of not less than 200%, and in this case, troubles such that the rubber sheet is easily torn off in the production process is suppressed. Furthermore, the crosslinked rubber sheet preferably has a hardness (JIS K6253) of less than 70 degrees. If the hardness is not less than 70 degrees, the reaction force given when the cover-integrated gasket is mounted on a main body is increased. As a result, the cover is deformed and sealing cannot be made completely, and thus, the sealing properties required for a gasket are sometimes deteriorated. The hardness is preferably not less than 10 degrees. If the hardness is less than 10 degrees, troubles such that the gasket is easily torn off, easily adheres, are brought about. The hardness is most preferably in the range of 20 to 40 degrees.

Examples of adhesives used for integrating the hard disk drive top cover with the gasket include epoxy resin-based adhesives, phenolic resin-based adhesives, isocyanate-based coupling agents and silane-based coupling agents. For applying the adhesive, an optimum method is selected from dip coating, spray coating, screen printing, brushing, stamping according to necessity.

The hard disk drive top cover gasket of the present invention preferably has no void caused by foaming, that is, this gasket is preferably so-called void-free.

### Sealing member for electric wire connector

The sealing member for an electric wire connector of the present invention comprises the aforesaid rubber composition of the present invention, and is preferably, for example, a solid polymer type (solid polymer electrolyte type) sealing member for an electric wire connector.

The sealing member of an electric wire connector of the present invention preferably has a durometer A hardness, which indicates a surface hardness of the cured product layer, of not more than 45. The durometer A hardness is an indicator of hardness and can be measured in accordance with JIS K6253. A durometer A hardness of not more than 45 can be obtained by variously controlling the proportions of various additives added to the composition, such as a reinforcing agent, a filler and a plasticizer, and the sealing member for an electric wire connector containing none of these additives also exhibits a desired low hardness. The lower limit of the hardness is not less than 5. If the hardness is less than the lower limit, the sealing member is too soft and exhibits poor performance for sealing the electric wire connector. However, a sealing member for an electric wire connector containing, as the reinforcing agent or the filler, a substance which acts as catalyst poison, such as sulfur or a halogen compound, is undesirable.

The electric wire connector of the present invention comprises the seal member for an electric wire connector of the present invention. The electric wire connector according to the present invention is particularly preferably an electric wire connector for automobiles.

### EXAMPLES

Hereinafter, the present invention is further described with reference to the following examples, but it should be construed that the present invention is in no way limited to those examples.

### Preparation Example 1

### Preparation of ethylene/propylene/5-vinyl-2-norbornene random copolymer (A-1)

Using a stainless steel polymerizer (stirring rotational speed: 250 rpm) having a substantial internal volume of 100 liters and equipped with a stirring blade, terpolymerization of ethylene, propylene and 5-vinyl-2-norbornene (abbreviated to VNB hereinafter) was continuously carried out. To the liquid phase in the polymerizer were continuously fed, at the side of the polymerizer, hexane at a rate of 60 l/hr, ethylene at a rate of 1.3 kg/hr, propylene at a rate of 2.5 kg/hr, VNB at a rate of 130 g/hr, hydrogen at a rate of 30 l/hr, VO (OEt) Cl₂ as a catalyst at a rate of 23 mmol/hr and Al (Et)_{1.5}Cl_{1.5} as a catalyst at a rate of 161 mmol/hr, and copolymerization reaction was carried out under the conditions of a polymerization temperature of 40°C and a polymerization pressure of 0.7 MPa to obtain an ethylene/propylene/VNB random copolymer (A-1) (referred to as a "copolymer (A-1)" hereinafter) in a state of a homogeneous solution. Thereafter, to the polymerization solution continuously drawn out from the bottom of the polymerizer was added a small amount of methanol to terminate the polymerization reaction. After the polymer was separated from the solvent by steam stripping treatment, the polymer was subjected to vacuum drying at 55°C for 48 hours.

The resulting copolymer (A-1) had an ethylene content of 52.7% by weight, a VNB content of 4.7% by weight, an iodine value of 9.5 g/100 g, a complex viscosity (complex viscosity as measured by the use of a viscoelasticity measuring device MCR301 manufactured by Anton Paar (Australia)) at 25°C of 1100 Pa·S, and an intrinsic viscosity Il as measured in decalin at 135°C, of 0.28 dl/g. Values in composition of the copolymer (A-1) are those determined by measurement with ¹³C-NMR method.

### Example 1

In a planetary mixer having a volume of 2 liters (manufactured by Inoue MFG., INC., trade name: PLM-2 model), 100 parts by weight of the copolymer (A-1) obtained in Preparation Example 1, 15 parts by weight of calcined talc (available from Asada Milling Co., Ltd., trade name: Enstac 24, average particle diameter: 7 µm) and 30 parts by weight of surface-treated precipitated silica (SS-95 available from Tosoh Silica Corporation, BET specific surface area: 50 m²/g, secondary particle diameter (average particle diameter as determined by the Coulter counter method): 2.4 µm, M value: 65) were kneaded at a temperature ranging from 50 to 80°C. Subsequently, to the resulting mixture were added 0.4 part by weight of a platinum-1,3,5,7-tetravinylmethylcyclosiloxane complex (platinum concentration: 0.5% by weight, vinyl-terminated siloxane oil solution) asacatalyst, 0.1 part by weight of 1-ethynyl-1-cyclohexanol as a reaction inhibitor, 4.5 parts by weight of a compound represented by the following formula [II-1] (referred to as a "crosslinking agent 1" hereinafter) as a crosslinking agent and 0.5 part by weight of a compound represented by the following formula [III-1] (referred to as a "crosslinking agent 2" hereinafter) as a crosslinking agent, and they were mixed to prepare a rubber composition. The M value of the surface-treated precipitated silica is a general indicator of the degree of modification treatment of silica, and is a value represented by a concentration of a methanol aqueous solution (% by volume of methanol) given when methanol aqueous solutions having different methanol concentrations are added to silica that is an M value evaluation target and the silica begins to have affinity (begins to become wet).

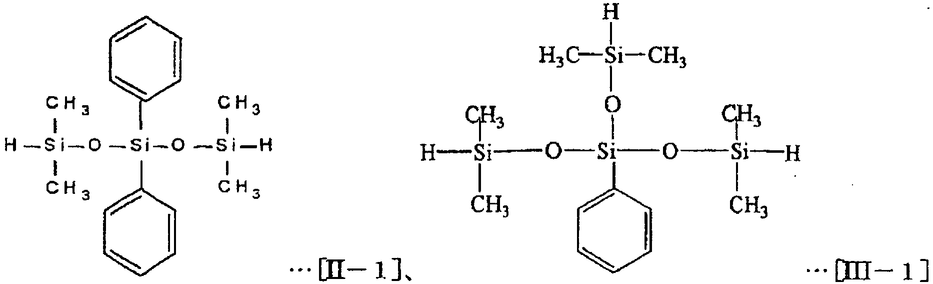

Subsequently, the resulting rubber composition was poured into a test sheet mold (140X100X2 mm) and compression molded at a hot plate preset temperature of 150°C and a mold compression pressure of 80 MPa for 5 minutes to obtain a crosslinked rubber sheet. Then, secondary vulcanization was further carried out in an air oven at 150°C for 1 hour to obtain a crosslinked rubber sheet.

Properties of the resulting crosslinked rubber sheet were measured or evaluated by the following methods. The results are set forth in Table 1.

### (1) Hardness

In accordance with JIS K6253, the A hardness was measured by a durometer method at a measuring temperature of 23°C.

### (2) Tensile test

In accordance with JIS K6251, a tensile test was carried out under the conditions of a measuring temperature of 23°C and a strain rate of 500 mm/min to measure a tensile strength at break and an elongation at break of the crosslinked sheet. Furthermore, a tensile strength at break and an elongation at break of the crosslinked sheet were measured also at a measuring temperature of 90°C in a similar manner.

### (3) Compression set

In accordance with JIS K6262 (1997), three 2-mm sheets were laminated, and a compression set was measured in air under the conditions of 150°C × 70 hours, and a compression set ratio was determined.

### (4) Compression crack

From the rubber sheet having a thickness of 2 mm, a specimen of 2 mm (thickness) × 3 mm (width) × 40 mm (length) was cut out, and the specimen was 90% compressed in the direction of thickness in an atmosphere of 90°C and held for 10 minutes. Thereafter, the specimen was released from the compression, and presence or absence of crack of the specimen was confirmed. In this measurement, the number of specimens used was five (n=5).

### (5) Complex viscosity

Complex viscosity of the rubber composition was measured at 25°C by the use of a viscoelasticity measuring device MCR301 manufactured by Anton Paar (Australia).

### Example 2

A rubber composition and a crosslinked rubber sheet were prepared and the properties were evaluated in the same manner as in Example 1, except that 30 parts by weight of carbon black (Asahi #50HG available fromAsahi Carbon Co., Ltd., amount of iodine adsorbed: 19 mg/g, average particle diameter: 85 nm, amount of DBP absorbed: 110 cm³/100 g) were used instead of the surface-treated precipitated silica.

### Comparative Example 1

A rubber composition and a cross linked rubber sheet were prepared and the properties were evaluated in the same manner as in Example 1, except that 15 parts by weight of talc (L-1 available from Nippon Talc Co., Ltd. , BET specific surface area: 11 m²/g, secondary particle diameter: 4.9 µm) were used instead of the calcined talc. The results are set forth in Table 1.

### Comparative Example 2

A rubber composition and a crosslinked rubber sheet were prepared and the properties were evaluated in the same manner as in Comparative Example 1, except that 30 parts by weight of carbon black (Asahi #50HG available from Asahi Carbon Co., Ltd., amount of iodine adsorbed: 19 mg/g, average particle diameter: 85 nm, amount of DBP absorbed: 110 cm³/100 g) were used instead of the surface-treated precipitated silica. The results are set forth in Table 1.

### Comparative Example 3

A rubber composition and a crosslinked rubber sheet were prepared and the properties were evaluated in the same manner as in Example 1, except that calcined talc was not used and the amount of the surface-treated precipitated silica used was changed to 45 parts by weight. The results are set forth in Table 1.

**Table 1**

| | | Ex. 1 | Ex. 2 | Comp. Ex. 1 | Comp. Ex. 2 . | Comp. Ex. 3 |
|---|---|---|---|---|---|---|
| Filler | | Calcined talc and surface-treated silica | Calcined talc and carbon black | Talc and surface-treated silica | Talc and carbon black | Surface-treated silica |
| Values in ordinary state | Hardness (Duro-A) | 43 | 40 | 41 | 44 | 46 |
| | Tensile strength (MPa) | 3.00 | 3.50 | 2.70 | 3.10 | 2.87 |
| | Elongation at break (%) | 410 | 370 | 360 | 350 | 400 |
| Compression set | 150°C, 70hr (%) | 10 | 12 | 15 | 16 | 17 |
| Compression crack | 90°C 90% compression | OK | OK | NG | NG | OK |
| n=5, number of cracked specimens | | 0/5 | 0/5 | 5/5 | 5/5 | 0/5 |
| Viscosity | | | | | | |
| MCR301 (25°C) | Complex viscosity (Pas) | 5500 | 3000 | 4500 | 3500 | 11000 |

From the results of the above examples and comparative examples, it can be seen that in Examples 1 and 2 the conditions of which were the same as those of Comparative Examples 1 and 2 respectively except for using calcined talc instead of talc, mechanical strength properties in ordinary state, i.e., hardness, tensile strength and elongation at break, were all improved and the compression set at a high temperature was decreased and thereby showed high recovery properties. Moreover, it can be also seen that in Examples 1 and 2, excellent rubber molded products which did not crack even under the high-temperature high-compression conditions of 90°C and 90% compression were obtained. In Comparative Examples 1 and 2 in which conventional blending was carried out, the viscosity was moderate and moldability was excellent, but crack occurred in the compression crack test under the high-temperature high-compression conditions. It can be also seen that in Comparative Example 3 in which the filler used was only surface-treated silica, the material viscosity was markedly increased and the moldability was poor.

### INDUSTRIAL APPLICABILITY

The rubber composition of the present invention is suitable for LIM molding and is favorably used for a fuel cell sealing member, various gasket members such as a hard disk drive top cover gasket member, a sealing member for an electric wire connector. In particular, a sealing member or a gasket member obtained from the rubber composition of the present invention can be favorably used for a high-reaction type fuel cell that is used under the conditions of high temperatures and high compression.

## Claims

1. A rubber composition comprising
(i) a copolymer [A] of ethylene, a C₃₋₂₀-(α-olefin) and a non-conjugated polyene, which has
- a weight ratio of ethylene units to α-olefin units of 355:65-95:5,
- an iodine value of 0.5-50, and
- an intrinsic viscosity [η], measured in decalin at 135°C, of 0.01-5.0 dl/g; and
(ii) calcined talc [B].

2. The rubber composition of claim 1, wherein the non-conjugated polyene in the copolymer [A] is at least one kind of norbornene compound of formula [I]: 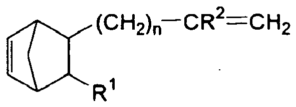 wherein n is an integer of 0-10, R¹ is H or C₁₋₁₀-alkyl, and R² is H or C₁₋₅-alkyl.

3. The rubber composition of claim 1 or 2, wherein the calcined talc [B]
- has an average particle diameter of 2-15 µm, and
- is present in an amount of 2-50 pbw per 100 pbw of the total amount of copolymer [A] and other resin components contained in the rubber composition.

4. The rubber composition of any of claims 1-3, which further comprises
(iii) surface-modified silica [C] obtained by surface-modifying precipitated silica and having
- a BET specific surface area of 30-80 m²/g,
- a particle diameter, measured by the Coulter counter method, of 1-4 µm, and
- an M value of not less than 50; and/or
(iv) carbon black [D] having an adsorbed amount of iodine of not more than 80 mg/g, an average particle diameter of not more than 250 nm and an absorbed amount of DBP of 10 to 300 cm³/100 g.

5. The rubber composition of any of claims 1-4, wherein the total amount of ([B]+[C]+[D]) is 10-60 pbw per 100 pbw of the total amount of copolymer [A] and other resin components contained in the rubber composition.

6. The rubber composition of any of claims 1-5, wherein the resin component contained in the rubber composition is only the copolymer [A].

7. The rubber composition as claimed in any one of claims 1 to 6, further comprising:
(v) a compound [E] of formula [II]: 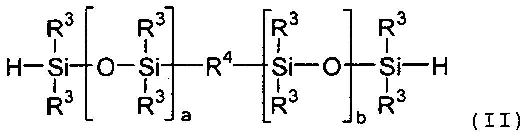 wherein
R³ each individually is a C₁₋₁₀-monovalent group, an optionally substituted saturated hydrocarbon group or an aromatic hydrocarbon group
R⁴ is a C₁₋₃₀-divalent organic group or -O-, and a and b each individually is an integer of 0-20;
and
(vi) a compound [F] of formula [III]; 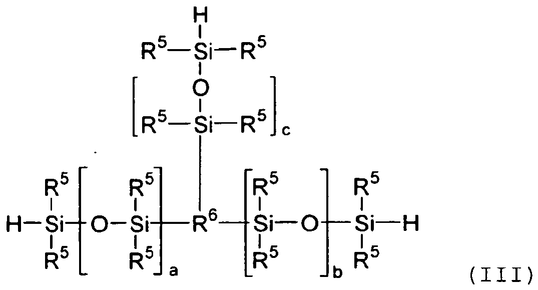 wherein
R⁵ each individually is a C₁₋₁₀-monovalent group, an optionally substituted saturated hydrocarbon group or an aromatic hydrocarbon group
R⁶ is a C₁₋₃₀-trivalent organic group, and a, b and c each individually is an integer of 0-20.

8. An article comprising the rubber composition of any of claims 1-7, which article is selected from a fuel cell sealing member and a fuel cell comprising it, a hard disk drive top cover gasket and a hard disk drive comprising it, a gasket member for LIM molding, and a sealing member for an electric wire connector and an electric wire connector comprising it.

9. The article of claim 8, which is an electric wire connector for automobiles.

## Patentansprüche

1. Kautschukzusammensetzung, umfassend
(i) ein Copolymer [A] aus Ethylen, einem C₃₋₂₀-(α-Olefin) und einem nicht-konjugierten Polyen, das:
- ein Gewichtsverhältnis von Ethyleneinheiten zu α-Olefineinheiten von 35:65 bis 95:5,
- eine Jodzahl von 0,5 bis 50, und
- eine intrinsische Viskosität [η], gemessen in Dekalin bei 135°C, von 0,01 bis 5,0 dl/g aufweist; und
(ii) kalzinierten Talk [B].

2. Kautschukzusammensetzung gemäß Anspruch 1, worin das nicht-konjugierte Polyen im Copolymer [A] mindestens eine Sorte einer Norbronenverbindung der Formel [I] ist: 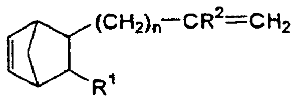 worin n eine ganze Zahl von 0 bis 10 ist, R¹ H oder C₁₋₁₀-Alkyl ist, und R² H oder C₁₋₅-Alkyl ist.

3. Kautschukzusammensetzung gemäß Anspruch 1 oder 2, worin der kalzinierte Talk [B]
- einen mittleren Teilchendurchmesser von 2 bis 15 µm hat, und
- in einer Menge von 2 bis 50 Gew.-Teilen pro 100 Gew.-Teilen der gesamten Menge des Copolymers [A] und anderer Harzkomponenten, die in der Kautschukzusammensetzung enthalten sind, vorhanden ist.

4. Kautschukzusammensetzung gemäß irgendeinem der Ansprüche 1 bis 3, die weiterhin umfasst:
(iii) Oberflächen-modifiziertes Siliziumdioxid [C], das durch Oberflächenmodifikation von gefälltem Siliziumdioxid erhalten wird und
- eine spezifische BET-Oberfläche von 30 bis 80 m²/g,
- einen Teilchendurchmesser, gemessen durch das Coulter-Zähler-Verfahren, von 1 bis 4 µm, und
- einen M-Wert von nicht weniger als 50 aufweist; und/oder
(iv) Ruß [D], der eine absorbierte Menge von Jod von nicht mehr als 80 mg/g, einen mittleren Teilchendurchmesser von nicht mehr als 250 nm und eine absorbierte Menge von DBP von 10 bis 300 cm³/100 g aufweist.

5. Kautschukzusammensetzung gemäß irgendeinem der Ansprüche 1 bis 4, worin die Gesamtmenge von ([B]+[C]+[D]) 10 bis 60 Gew.-Teile pro 100 Gew.-Teile der Gesamtmenge des Copolymers [A] und der anderen Harzkomponenten, die in der Kautschukzusammensetzung enthalten sind, ist.

6. Kautschukzusammensetzung gemäß irgendeinem der Ansprüche 1 bis 5, worin die in der Kautschukzusammensetzung enthaltene Harzkomponente nur das Copolymer [A] ist.

7. Kautschukzusammensetzung gemäß irgendeinem der Ansprüche 1 bis 6, die weiterhin umfasst:
(v) eine Verbindung [E] der Formel [II]: 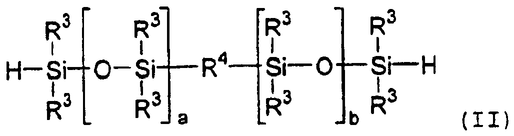 worin
R³ jeweils einzeln eine C₁₋₁₀-einwertige Gruppe, eine optional substituierte gesättigte Kohlenwasserstoffgruppe oder eine aromatische Kohlenwasserstoffgruppe ist,
R⁴ eine C₁₋₃₀-zweiwertige organische Gruppe oder -O- ist und
a und b jeweils einzeln eine ganze Zahl von 0 bis 20 ist und
(vi) eine Verbindung [F] der Formel [III]: 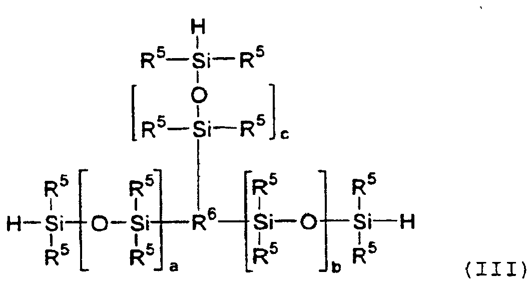 worin
R⁵ jeweils einzeln eine C₁₋₁₀-einwertige Gruppe, eine optional substituierte gesättigte Kohlenwasserstoffgruppe oder eine aromatische Kohlenwasserstoffgruppe ist,
R⁶ eine C₁₋₁₀-dreiwertige organische Gruppe ist, und
a, b und c jeweils einzeln eine ganze Zahl von 0 bis 20 ist.

8. Erzeugnis, das die Kautschukzusammensetzung gemäß irgendeinem der Ansprüche 1 bis 7 umfasst, worin das Erzeugnis aus einem Brennstoffzellen-Dichtungselement und einer Brennstoffzelle, die es umfasst, einer Festplatten-Deckelabdeckungsdichtung und einer Festplatte, die sie umfasst, einem Dichtungselement für LIM-Formen und einem Dichtungselement für einen elektrischen Kabelverbinder und einen elektrischen Kabelverbinder, der es umfasst, ausgewählt ist.

9. Erzeugnis gemäß Anspruch 8, der ein elektrischer Kabelverbinder für Automobile ist.

## Revendications

1. Composition de caoutchouc comprenant
(i) un copolymère [A] d'éthylène, une α-oléfine en C₃-C₂₀ et un polyène non conjugué, qui a
- un rapport en poids des unités éthylène sur les unités α-oléfine de 35:65 à 95:5,
- une valeur d'iode de 0,5 à 50, et
- une viscosité intrinsèque [η], mesurée dans la décaline à 135°C, de 0,01 à 5,0 dl/g ; et
(ii) du talc calciné [B].

2. Composition de caoutchouc selon la revendication 1, dans laquelle le polyène non conjugué dans le copolymère [A] est au moins un type de composé norbornène de formule [I] : 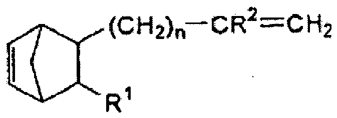 dans laquelle n est un entier de 0 à 10, R¹ est H ou un alkyle en C₁-C₁₀, et R² est H ou un alkyle en C₁-C₅.

3. Composition de caoutchouc selon la revendication 1 ou 2, dans laquelle le talc calciné [B]
- a un diamètre moyen de particules de 2 à 15 µm, et
- est présent dans une quantité de 2 à 50 parties en poids pour 100 parties en poids de la quantité totale de copolymère [A] et autres composants de résine contenus dans la composition de caoutchouc.

4. Composition de caoutchouc selon l'une quelconque des revendications 1 à 3, qui comprend en outre
(iii) une silice modifiée en surface [C] obtenue par modification en surface d'une silice précipitée et ayant
- une superficie spécifique BET de 30 à 80 m²/g,
- un diamètre de particules, mesuré par la méthode au compteur Coulter, de 1 à 4 µm, et
- une valeur M de pas moins de 50 ; et/ou
(iv) du noir de carbone [D] ayant une quantité adsorbée d'iode de pas plus de 80 mg/g, un diamètre moyen de particules de pas plus de 250 nm et une quantité adsorbée de DBP de 10 à 300 cm³/100 g.

5. Composition de caoutchouc selon l'une quelconque des revendications 1 à 4, dans laquelle la quantité totale de ([B]+[C]+[D]) est 10 à 60 parties en poids pour 100 parties en poids de la quantité totale de copolymère [A] et autres composants de résine contenus dans la composition de caoutchouc.

6. Composition de caoutchouc selon l'une quelconque des revendications 1 à 5, dans laquelle le composant de résine contenu dans la composition de caoutchouc n'est que le copolymère [A].

7. Composition de caoutchouc selon l'une quelconque des revendications 1 à 6, comprenant en outre :
(v) un composé [E] de formule [II] : 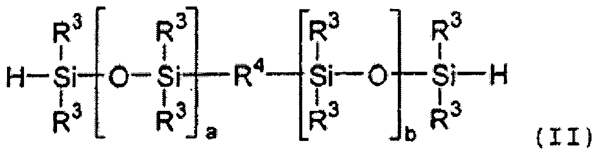 dans laquelle
les R³ sont chacun individuellement un groupe monovalent en C₁-C₁₀, un groupe hydrocarbure saturé facultativement substitué ou un groupe hydrocarbure aromatique,
R⁴ est un groupe organique divalent en C₁-C₃₀ ou -O-, et
a et b sont chacun individuellement un entier de 0 à 20 ; et
(vi) un composé [F] de formule [III] : 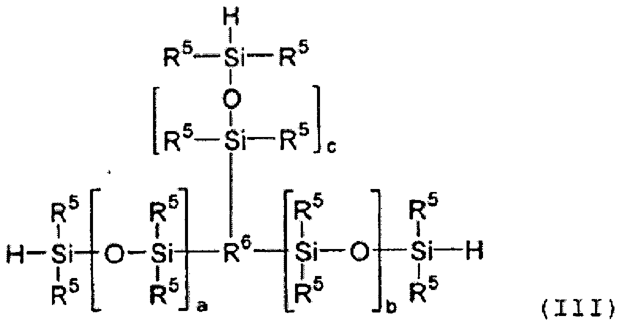 dans laquelle
les R⁵ sont chacun individuellement un groupe monovalent en C₁-C₁₀, un groupe hydrocarbure saturé facultativement substitué ou un groupe hydrocarbure aromatique,
R⁶ est un groupe organique trivalent en C₁-C₃₀, et
a, b et c sont chacun individuellement un entier de 0 à 20.

8. Article comprenant la composition de caoutchouc selon l'une quelconque des revendications 1 à 7, lequel article est choisi parmi un élément d'étanchéité de pile à combustible et une pile à combustible comprenant celui-ci, un joint de capot supérieur de lecteur de disque dur et un lecteur de disque dur comprenant celui-ci, un élément de joint pour un moulage LIM, et un élément d'étanchéité pour un connecteur de fils électriques et un connecteur de fils électriques comprenant celui-ci.

9. Article selon la revendication 8, qui est un connecteur de fils électriques pour automobiles.
